# EUROPÄISCHE PATENTSCHRIFT

(11) **EP 1 759 183 B1**
(45) Veröffentlichungstag und Bekanntmachung des Hinweises auf die Patenterteilung: **13.07.2011**
(21) Anmeldenummer: 05749699.4
(22) Anmeldetag: 15.04.2005
(51) Int. Cl.: G01N 15/06

(54) **VERFAHREN ZUR BEEINFLUSSUNG DER RUSSANLAGERUNG AUF SENSOREN**
METHOD FOR INFLUENCING THE DEPOSITION OF SOOT ON SENSORS
PROCEDE POUR INFLUER SUR LE DEPOT DE SUIE SUR DES CAPTEURS

(30) Priorität: 16.06.2004 DE 102004028997
(43) Veröffentlichungstag der Anmeldung: 07.03.2007
(73) Patentinhaber: ROBERT BOSCH GMBH, 70442 Stuttgart (DE)
(72) Erfinder: SCHNELL, Frank, 70839 Gerlingen (DE); DORFMUELLER, Lutz, 70839 Gerlingen (DE); SCHMIDT, Ralf, 70839 Gerlingen (DE); ROESCH, Sabine, 71254 Ditzingen (DE); MARX, Helmut, 70771 Echterdingen (DE); SCHITTENHELM, Henrik, 70182 Stuttgart (DE)
(86) Internationale Anmeldenummer: PCT/EP2005/051664
(87) Internationale Veröffentlichungsnummer: WO 2005/124313

(56) Entgegenhaltungen:
- DE-A1- 19 853 841
- US-A- 5 457 396
- US-B1- 6 255 954

## Beschreibung

### Technisches Gebiet

Die Anforderungen an die Partikelemission von Verbrennungskraftmaschinen, insbesondere selbstzündende Verbrennungskraftmaschinen steigen ständig. Im Zuge der beabsichtigten Einführung weiterer Normwerke besteht das Erfordernis, den Russausstoß nach der Verbrennungskraftmaschine bzw. nach einem Dieselpartikelfilter während des Fahrbetriebes zu überwachen. Darüber hinaus ist vorgesehen, eine Beladungsprognose von Dieselpartikelfiltern zur Bestimmung des Russeintrags und zur Optimierung der Regenerationsstrategie beziehungsweise zur Regenerationskontrolle vorzusehen, um eine hohe Systemsicherheit für das Dieselpartikelfiltersystem zu gewährleisten.

### Stand der Technik

Derzeit sind resistive Partikelsensoren für leitfähige Partikel bekannt, bei denen zwei oder mehrere metallische Elektroden vorgesehen sind, wobei die sich an diesen anlagernden Teilchen, insbesondere Russpartikel, die kammartig ineinandergreifenden Elektroden kur z-schließen und damit die Impedanz der Elektrodenstruktur ändern. Mit steigender Partikelkonzentration auf der Sensorfläche wird auf diese Weise ein abnehmender Widerstand bzw. ein zunehmender Strom bei konstanter angelegter Spannung zwischen den Elektroden messbar. Üblicherweise wird ein Schwellwert, eine Auslöseschwelle definiert und die Sammelzeit als Maß für die angelagerte Russpartikelmasse angenommen. Zur Regeneration des Sensorelementes nach der Russanlagerung an diesem muss das Sensorelement in der Regel mit Hilfe eines integrierten Heizelementes freigebrannt werden. Während der Freibrennphase kann der Sensor die Russmenge nicht erfassen.

Aus DE 101 49 333 A1 ist eine Sensorvorrichtung zur Messung der Feuchtigkeit von Gasen bekannt. Es ist eine auf einem Substrat angeordnete Widerstandsmessstruktur vorgesehen, die mit einer Russschicht zusammenwirkt; ferner ist eine Temperaturmesseinrichtung vorgesehen. Die Temperaturmesseinrichtung umfasst ein Widerstandsthermometer sowie Mittel zur Messung eines frequenzabhängigen Wechselstromwiderstandes. Ferner ist der Sensorvorrichtung eine Heizeinrichtung zugeordnet. Die Teilchengröße der in der Russschicht enthaltenen Russpartikel liegt zwischen 20 und 150 nm.

Aus WO 03/006976 A2 ist ein Sensor zur Detektion von Teilchen und ein Verfahren zu dessen Funktionskontrolle bekannt. Der Sensor dient der Detektion von Teilchen in einem Gasstrom, insbesondere der Detektion von Russpartikeln in einem Abgasstrom Es sind mindestens zwei Messelektroden auf einem Substrat aus einem isolierenden Werkstoff angeordnet Die Messelektroden sind zumindest teilweise von einer Fanghülse überdeckt Dem Sensor ist ferner ein Heizelement zugeordnet. Die Funktionskontrolle des Sensors zur Detektion von Teilchen, insbesondere von Russpartikeln, erfolgt dadurch, dass den Messelektroden des Sensors ein Kondensator zugeordnet ist und die Kapazität dieses Kondensators ermittelt wird. Bei Abweichung der Kapazität des Kondensators vom Sollwert wird eine Fehlermeldung generiert Zum Abbrand der angelagerten Russpartikel wird der Sensor aufgeheizt, wobei nach dem Aufheizen des Sensors der Isolationswiderstand zwischen den Messelektroden des Sensors gemessen wird. Der nach dem Aufheizen des Sensors gemessene Isolationswiderstand dient als Korrekturgröße für den Betrieb des Sensors.

US 62 55 954 offenbart ein Verfahren zur Steuerung der Partikel anlagerung auf einem Sensorelement, wobei eine zwischen zwei Elektroden angelegte Spannung schrittweise erhöht wird, um eine kritische Spannung, die einer Partikel überbrückung der Elektroden entspricht, zu ermitteln.

### Darstellung der Erfindung

Die erfindungsgemäß vorgeschlagene Lösung ermöglicht die Beeinflussung der Anlagerungsrate der Partikel am Sensor durch elektronische und damit bei Sensorbetrieb vornehmbare variable Maßnahmen. Da sich die Russkonzentrationen vor Dieselpartikelfilter und nach Dieselpartikelfilter je nach eingesetzter Technologie stark voneinander unterscheiden können, aus Kostengründen aber identische Sensoren gewünscht werden, erlaubt das erfindungsgemäß vorgeschlagene Verfahren die Einstellung der jeweils eingesetzten Sensoren jeweils angepasst an den Einsatzbereich der Sensoren, d.h. ob vor dem Dieselpartikelfilter angeordnet oder dem Dieselpartikelfilter nachgeschaltet. Durch das erfindungsgemäß vorgeschlagene Verfahren lässt sich der Empfindlichkeitsbereich der Sensoren auf den optimalen Konzentrationsbereich einstellen sowie die Auslösezeit des Sensors minimieren und die sich daran anschließende Messzeit maximieren. Dies wird durch das Anlegen unterschiedlicher Spannungen an den Sensor erreicht. Bei Auswahl einer höheren Spannung, mit welcher der Sensor betrieben wird, folgt der Aufbau der Russschicht schneller als bei Betrieb des Sensors mit einer geringeren Spannung. Um ein möglichst schnelles Überschreiten der Auslöseschwelle zu erreichen und ein schnell auswertbares, d.h. messbares Signal zu erhalten, wird der Sensor mit einer ersten höheren Spannung U₁ betrieben. Danach erfolgt ein Umschalten der Spannung auf eine zweite Spannung U₂, so dass eine verlängerte Messdauer erreicht werden kann. Während der verlängerten Messdauer erfolgt eine kontinuierliche Erfassung des Signalverlaufes, aus dessen Signalgradienten Informationen bezüglich auftretender Russstöße abgeleitet werden können. Dem erfindungsgemäß vorgeschlagenen Verfahren folgend wird zunächst die Sammelzeit bis zum Erreichen der Auslöseschwelle, welche mit hohen Messunsicherheiten behaflet ist, durch den Betrieb des Sensorelementes mit einer hohen Spannung realisiert, und das Sensorelement anschließend mit einer verminderten Spannung betrieben, so dass die Messzeit gestreckt werden kann. Demzufolge wirken sich während der Sammelzeit auftretende Messunsicherheiten nicht signifikant aus.

Durch bei Betrieb des Sensors vornehmbare, vom Einbauort des Sensors abhängige variable Maßnahmen, kann bei einem vorgegebenen, festen Sensordesign und vorgegebenem, festen Aufbau hinsichtlich Verbauung und Applikation, die Anlagerungsrate der Russpartikel auf dem Sensor und damit der Empfindlichkeitsbereich des Sensors auf elektronischem Wege verstellt werden und somit an den Einbauort des betreffenden Sensors optimal angepasst werden. Ein und derselbe Sensor kann für verschiedene Anwendungen, so z.B. für hohe Russkonzentrationen oder für eine On-Board-Diagnose unmittelbar direkt elektronisch eingestellt werden. Der vor dem Dieselpartikelfiltersystem angeordnete Sensor dient der Detektion der in den Dieselpartikelfilter hineingelangten Russmasse.

Der dem Dieselpartikelfiltersystem vorgeschaltete Sensor dient zur Erhöhung der Systemsicherheit und zur Sicherstellung eines Betriebes des Dieselpartikelfilters unter optimalen Bedingungen. Da diese in hohem Maße von der im Dieselpartikelfilter eingelagerten Russmasse abhängen, ist eine genaue Messung der Partikelkonzentration vor dem Dieselpartikelfiltersystem, insbesondere die Ermittlung einer hohen Partikelkonzentration vor dem Dieselpartikelfilter, von hoher Bedeutung.

Ein dem Dieselpartikelfilter nachgeschalteter Sensor bietet die Möglichkeit, eine On-Board-Diagnose vorzunehmen und dient ferner der Sicherstellung des korrekten Betriebes der Abgasnachbehandlungsanlage.

### Zeichnung

Anhand der Zeichnung wird die Erfindung nachstehend eingehender beschrieben.

Es zeigt:
- Figur 1: die Draufsicht auf einen Sensor mit einer Elektrodenstruktur,
- Figur 2: ein Seitenansicht der auf ein Trägersubstrat aufgebrachten Elektro- denstruktur, bedeckt von einer Russpartikelschicht,
- Figur 3: eine Darstellung des sich an der Elektrodenstruktur gemäß Figur 1 und Figur 2 ausbildenden elektrischen Feldes,
- Figur 4: ein sich bei einer ersten, höheren Spannung U₁ einstellendes Sensorsignal, welches eine Auslöseschwelle nach einer Zeitspanne t₁ erreicht und
- Figur 5: ein sich bei einer zweiten, niedrigen Spannung U₂ über die Zeit einstellen- des Sensorsignal und
- Figur 6: eine Umschaltstrategie für das Sensorelement.

### Ausführungsvarianten

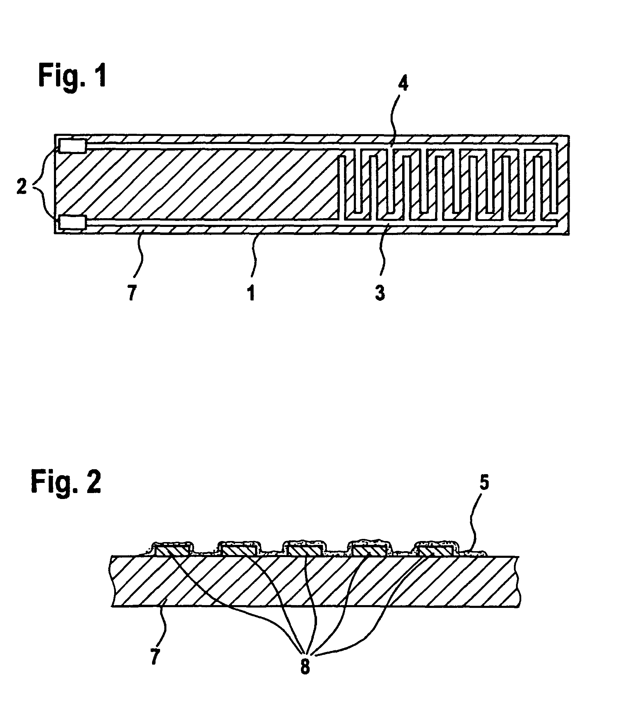

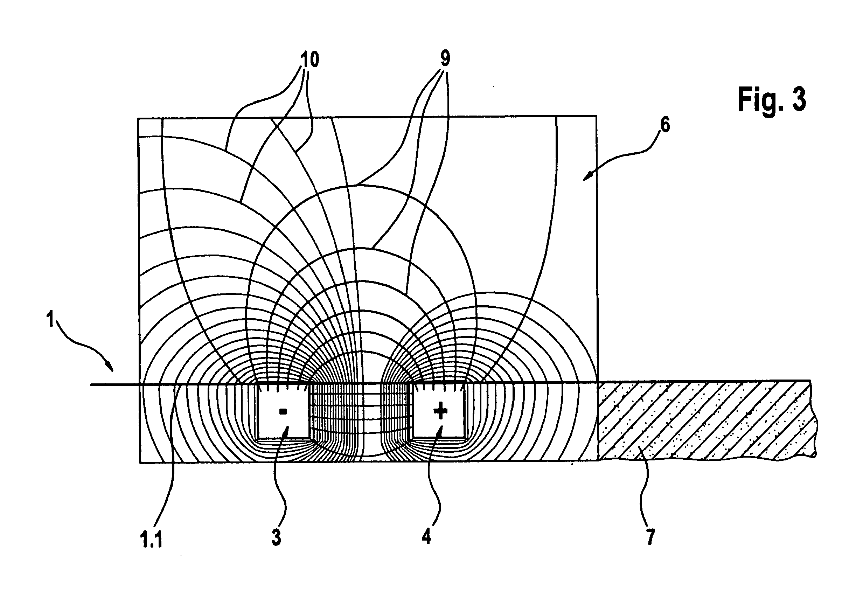

Das Sensorelement 1 umfasst ein als Träger dienendes Substrat 7, welches beispielsweise als eine Aluminiumoxid-Keramik beschaffen sein kann. Auf dem als Träger dienenden Substrat 7 ist eine Widerstandsmessstruktur aufgebracht, welche eine erste Kammelektrode 3 sowie eine zweite Kammelektrode 4 aufweist. Die die erste Kammelektrode 3 und die zweite Kammelektrode 4 umfassende Widerstandsmessstruktur dient zur Messung des elektrischen Widerstandes einer Partikelschicht 5 - vgl. Darstellung gemäß Figur 2 -, welche die erste Kammelektrode 3 und die zweite Kammelektrode 4 des Sensorelements 1 überdeckt. Bei Anlegen einer Spannung an den Spannungsklemmen 2 des Sensorelements 1 bildet sich zwischen den ineinandergreifenden Kammelektroden 3, 4 ein inhomogenes elektrisches Feld 6 aus, vgl. Darstellung gemäß Figur 3, wobei das inhomogene elektrische Feld 6 durch Feldlinien 9 dargestellt ist.

Die sich am Sensorelement 1 anlagernden Partikel, insbesondere Russpartikel können im elektrischen Feld als elektrische Dipole angesehen werden. Das inhomogene elektrische Feld 6 übt eine resultierende Kraft auf den elektrischen Dipol, d.h. im vorliegenden Falle auf die Russpartikel aus. Diese werden zu den Elektroden 3, 4 hingezogen und lagern sich dadurch an diesem als Partikelschicht 5 an. Sind die Russpartikel geladen, so erfahren sie nach *F̅̅̅* = *q* · *E̅̅̅* eine zusätzliche Kraftwirkung zu den Elektroden 3,4 hin und lagern sich auf dem Sensorelement 1 ab (F = Kraft; q = Ladung; E = elektrische Feldstärke).

Passiert die partikelbeladene Strömung das in Figur 1 dargestellte Sensorelement 1, wird abhängig von der anliegenden Spannung U₁ = z.B. 21 Volt bzw. U₂ = 10 Volt eine elektrische Kraft auf die in der Strömung enthaltenen Partikel ausgeübt. Durch Beeinflussung der Spannung, mit welcher das Sensorelement 1 an den Spannungsklemmen 2 beaufschlagt ist, kann dem diffusionsgesteuerten Prozess der Russanlagerung eine zusätzliche steuerbare Größe, aufgeprägt werden, um den Massenfluss der Russpartikel auf die Sensoroberfläche 1.1 des Sensorelements 1 zu beeinflussen.

Dies bedeutet, dass bei Anlegen einer höheren Spannung U₁ = 21 Volt die Russschicht aufgrund des stärkeren inhomogenen elektrischen Feldes 6 schneller aufgebaut wird als beim Anlegen einer geringeren Spannung U₂ von beispielsweise 10 Volt, wodurch ein schwächeres inhomogenes elektrisches Feld 6 entsteht.

Figur 2 zeigt die Seitenansicht des Sensorelements gemäß der Darstellung in Figur 1.

Aus der Darstellung gemäß Figur 2 geht hervor, dass sich oberhalb der kammartig ineinander eingreifenden Elektroden 3 und 4 eine Russpartikelschicht 5 aufgebaut hat. Diese überdeckt die Elektoden 3, 4 beziehungsweise 8. Wird das Sensorelement 1 mit einer erhöhten Spannung U₁, so zum Beispiel 21 Volt betrieben, baut sich die Partikelschicht 5 an der Oberseite der kammartig ineinandergreifenden Elektroden 3 und 4 schneller auf und deren Dicke nimmt rascher zu, verglichen mit einem Betrieb des Sensorelements 1 mit einer niedrigeren Spannung U₂.

Figur 3 ist in schematischer Anordnung das sich ausbildende inhomogene elektrische Feld, dargestellt durch dessen Feldlinien 9 und Äquipotentiallinien 10, zu entnehmen.

Die ineinandergreifenden erste Kammelektrode 3 und die zweite Kammelektrode 4 sind mit einer Spannungsquelle, so zum Beispiel dem Bordnetz des Fahrzeuges verbunden. Je nach Spannung, sei es eine Spannung U₂ von beispielsweise 10 Volt, sei es eine erhöhte Spannung U₁ von 21 Volt, bilden sich an den ineinandergreifenden ersten Kammelektroden 3 und zweiten Kammelektroden 4 oberhalb der zwischen diesen liegenden Freiräumen das in Figur 3 dargestellte inhomogene elektrische Feld 6, dargestellt durch die Feldlinie 9, aus.

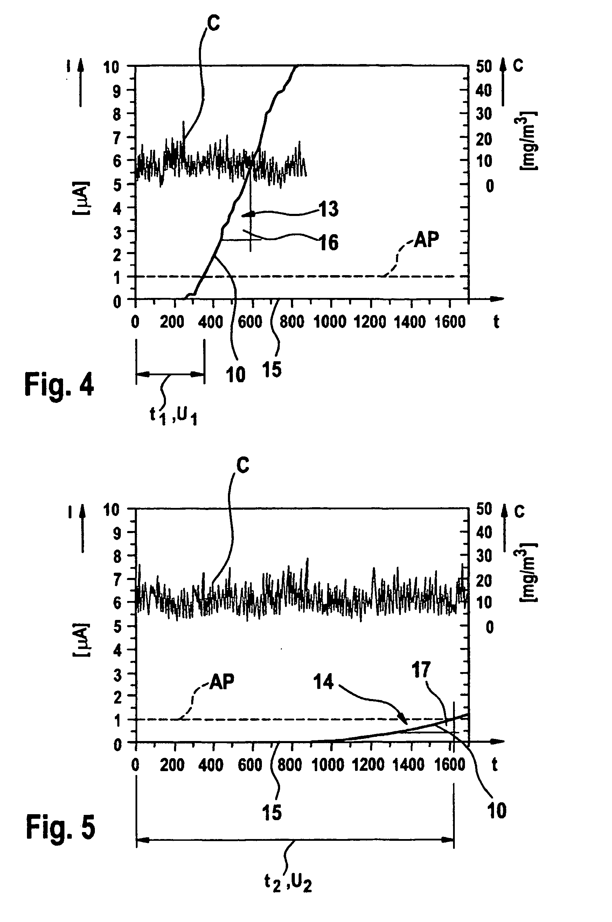

Den Figuren 4 und 5 ist das Auslöseverhalten des Sensorelements 1 im Betrieb mit einer ersten Spannung U₁ von zum Beispiel 21 Volt und im Betrieb mit einer zweiten Spannung U₂ von zum Beispiel 10 Volt zu entnehmen. In den Darstellungen gemäß der Figuren 4 und 5 hat keine Umschaltung zwischen den beiden Spannungen U₁ und U₂ stattgefunden.

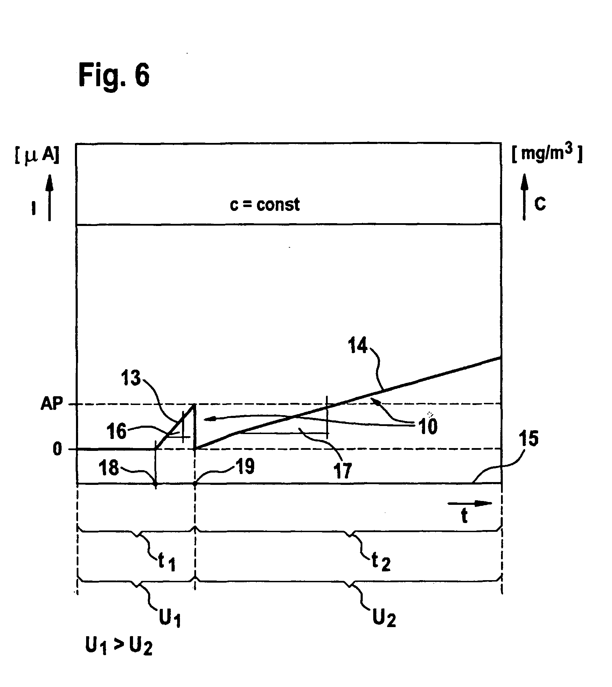

Figur 4 ist zu entnehmen, dass die AP bezeichnete Auslöseschwelle von ca. 1 µA durch das Sensorsignal 10 nach einer Zeitspanne t₁ überschritten wird. Aufgrund des Anliegens der erhöhten Spannung U₁ von zum Beispiel 21 Volt steigt das Sensorsignal 10 sehr rasch an und überschreitet die Auslöseschwelle AP nach einer relativ kurzen Zeitspanne t₁. Die Auslöseschwelle AP kann willkürlich gesetzt werden und auch durchaus bei 2 µA oder 3 µA eingestellt werden. Aufgrund der erhöhten Spannung U₁ steigt das Sensorsignal 10 mit einer starken Steigung sehr rasch an, verdeutlicht durch den Gradienten 16 und durch den Verlauf 13 des Sensorsignals . Nach dem Erreichen messbarer Ströme, d.h. nach Überschreiten der Auslöseschwelle AP ist aus dem Gradienten 16 und dessen Änderung über die Zeitachse 15 eine direkte Information über die pro Zeiteinheit auf der Oberfläche 1.1 des Sensorelements 1 angelagerte Russmenge möglich. Der Betrieb des Sensorelements 1 ist nach Überschreiten der Auslöseschwelle AP höchst wünschenswert, da nach Überschreiten der Auslöseschwelle AP Fehler und Quereinflüsse sichtbar sind. Nach Erreichen der Auslöseschwelle AP nach der Zeitspanne t₁ wird der Betrieb des Sensorelements 1 mit der erhöhten Spannung V₁, von zum Beispiel 21 Volt, auf einen Betrieb mit einer niedrigeren Spannung U₂ von zum Beispiel 10 Volt umgeschaltet, wie in Figur 6 dargestellt.

Die Zeitspanne t₁, während der das Sensorelement 1 mit einer erhöhten Spannung U₁ betrieben wird, dient dazu, schnell die Auslöseschwelle AP für das Sensorsignal 10 zu erreichen, da das Sensorelement 1 während der Zeitspanne t₁ keine Daten liefert.

Die Umschaltsttategie zwischen der erhöhten Spannung U₁ von beispielsweise 21 Volt und der niedrigeren Spannung U₂ von beispielsweise 10 Volt ist dadurch gegeben, dass die Zeitspanne t₁ bis zum Erreichen der Auslöseschwelle AP durch Anlegen einer hohen Spannung U₁ verkürzt wird und die sich an diese anschließende Zeitspanne t₂, d.h. die eigentliche Messzeit, mit sichtbaren Signaländerungen durch Anlegen der niedrigen Spannung U₂, wie zum Beispiel 10 Volt, verlängert wird Dadurch kommt es aufgrund des schwächeren, inhomogenen elektrischen Feldes 6 zu einer geringeren Partikelanlagerungsrate an der Oberfläche 1.1 des Sensorelements 1, wodurch eine längere Zeit vergeht, bis eine Sättigung erreicht ist und eine mit Erreichen der Sättigung verbundene notwendige Regeneration des Sensorelements 1 vorzunehmen ist.

Aus der Darstellung gemäß Figur 5 geht hervor, dass während der Zeitspanne t₂, d.h. der eigentlichen Messzeit, das Sensorsignal 10 einen flachen Signalgradienten 17 aufweist, demzufolge nicht so rasch ansteigt, wie das Sensorsignal 10 gemäß der Darstellung in Figur 5, wenn das Sensorelement 1 mit einer erhöhten ersten Spannung U₁ von zum Beispiel 21 Volt betrieben wird.

Vorstehend wurde der Betrieb des Sensorelements 1 gemäß den Darstellungen der Figuren 1 und 2 mit einer erhöhten Spannung U₁ von beispielsweise 21 Volt während der Zeitdauer t₁ und nach Umschalten mit einer Spannung U₂ von 10 Volt während der zweiten Zeitdauer t₂ beschrieben. Prinzipiell können alle Spannungen, die im Bordnetz erzeugbar sind, eingesetzt werden und die Auswahl der jeweiligen Spannungsniveaus kann an den jeweiligen Applikationsfall angepasst werden. Die Spannungen werden zweckmäßig zwischen 0 Volt und 42 Volt liegen, jedoch sind durchaus auch höhere Spannungen denkbar. Generell gilt, dass bis zum Überschreiten der Auslöseschwelle AP generell höhere Spannungen zu bevorzugen sind und nach Überschreiten der Auslöseschwelle AP auf geringere Spannungen umzuschalten ist. Die erste Spannung U₁ liegt bevorzugt zwischen 10 Volt und 42 Volt. Die zweite Spannung U₂, von Null verschieden, liegt bevorzugt im Bereich zwischen 0 Volt und 10 Volt.

Die Beeinflussung der Russanlagerung, d.h. der Aufbau der Partikelschicht 5 erfolgt über die Erzeugung von Feldgradienten durch das inhomogene elektrische Feld 6 oberhalb der Fläche des Sensorelements 1. Neben der oben beschriebenen Variation der an das Sensorelement 1 angelegten Spannungen U₁, U₂ kann auch die Struktur der ersten Kammelektrode 3 und der zweiten Kammelektrode 4 verändert werden. Generell gilt, dass geringe Elektrodenabstände zwischen der ersten Kammelektrode 3 und der zweiten Kammelektrode 4 zu hohen Feldgradienten führen. Neben den in Figur 1 und 2 dargestellten Ausführungsvarianten der Elektroden als Kammelektroden 3, 4 können diese auch anders beschaffen sein, so zum Beispiel als linienförmig ausgebildete Elektroden oder als netz- beziehungsweise gitterartig ausgebildete Elektroden, deren Kontaktierung unterhalb einer Netz- oder Gitterelektrode erfolgt.

Eine lokale Feldstärkeerhöhung kann auch durch die Auswahl eines geeigneten Elektrodenlayouts sowie dessen Oberflächenbeschaffenheit beigetragen werden. Die Auswahl des E-lektrodenlayouts, beziehungsweise dessen Oberflächenbeschaffenheit kann bei der Sensorherstellung bereits in optimaler Weise an den späteren Applikationsfall angepasst werden.

Aus der Darstellung gemäß Figur 6 geht hervor, dass nach der Zeitspanne t₁, innerhalb der das Sensorelement 1 mit einer erhöhten Spannung U₁ von etwa 21 Volt betrieben werden kann, die Spannung zum Betrieb des Sensorelements 1 auf eine niedrigere Spannung U₂ von beispielsweise 10 Volt herabgesetzt wird. Dadurch kann das Sensorelement 1 in einem optimalen Betriebszustand betrieben werden, der eine deutliche Verlängerung der Messzeit nach Überschreiten der Auslöseschwelle AP ermöglicht. Aus der Gegenüberstellung der Zeitspanne t₁ beziehungsweise t₂ gemäß der Darstellung in Figur 6 geht hervor, dass eine Verkürzung der Auslösezeit durch das Anlegen einer hohen Spannung U₁ sowie eine Verlängerung der Messzeit (Zeitspanne t₂) durch Anlegen geringer Spannung U₂ erzielt werden kann.

### Bezugszeichenliste

- 1: Sensorelement
- 1.1: Sensoroberseite
- 2: Spannungsklemmen
- 3: erste Kammelektrode
- 4: zweite Kammelektrode
- 5: Partikelschicht (Russschicht)
- 6: elektrisches Feld
- 7: Substrat
- 8: Elektroden
- 9: Feldlinie
- 10: Sensorsignal [µA]
- c: Russkonzentration [mg/m³]
- AP: Auslöseschwelle
- 13: Verlauf Sensorsignal 10 bei U₁ = 21 Volt
- 14: Verlauf Sensorsignal 10 bei U₂ =10 Volt
- 15: Zeitachse
- 16: Signalgradient bei U₁
- 17: Signalgradient bei U₂
- 18: Zeitpunkt Signalanstieg
- 19: Umschaltzeitpunkt U₁ erste Spannung
- 20: Umschaltzeitpunkt U₂ zweite Spannung
- t₁: Zeitspanne von U₁
- t₂: Zeitspanne von U₂

## Patentansprüche

1. Verfahren zur Steuerung der Partikelanlagerung auf einem Sensorelement (1), das eine erste Elektrode (3) und eine weitere Elektrode (4) aufweist, an welchen an Spannungsklemmen (2) eine erste Spannung U₁ sowie eine zweite Spannung U₂ angelegt werden
**dadurch gekennzeichnet,**
**dass** das Sensorelement (1) während einer ersten Zeitspanne t₁ mit der ersten Spannung U₁ und nach Überschreiten einer Auslöseschwelle AP eines resultierenden Stroms des Sensorelements (1) mit der zweiten Spannung U₂ betrieben wird, wobei die zweite Spannung U₂ von Null verschieden und im Vergleich zur ersten Spannung U₁ kleiner ist, so dass in der ersten Zeitspanne t₁ ein schneller Aufbau einer Partikelschicht (5) auf dem Sensorelement (1) erfolgt, um schnell ein auswertbares Signal zu erhalten, und in der zweiten als Messzeit genutzten Zeitspanne t₂ der Signalverlauf des resultierenden Stroms erfasst wird, und dass nach Ablauf der zweiten Zeitspanne t₂ eine Regeneration des Sensorelements (1) durchgeführt wird.

2. Verfahren gemäß Anspruch 1, **dadurch gekennzeichnet, dass** durch Auswahl des Spannungsniveaus der ersten Spannung U₁ die Zeitdauer t₁ bis zum Überschreiten der Auslöseschwelle AP des Sensorelements (1) minimiert wird.

3. Verfahren gemäß Anspruch 1, **dadurch gekennzeichnet, dass** das Sensorelement (1) zur Verlängerung der Messdauer während der zweiten Zeitspanne t₂ mit einer geringeren Spannung U₂ betrieben wird.

4. Verfahren gemäß Anspruch 1, **dadurch gekennzeichnet, dass** die erste Spannung U₁, die an den Spannungsklemmen (2) des Sensorelements (1) angelegt wird, zwischen 10 Volt und 42 Volt liegt.

5. Verfahren gemäß Anspruch 1, **dadurch gekennzeichnet, dass** die zweite Spannung U₂, die an den Spannungsklemmen (2) des Sensorelements (1) angelegt wird, im Bereich zwischen 0 Volt und 10 Volt liegt.

## Claims

1. Method for controlling the deposition of particles on a sensor element (1) having a first electrode (3) and a further electrode (4), to which a first voltage U₁ and a second voltage U₂ are applied at voltage terminals (2),
**characterized in that** the sensor element (1) is operated with the first voltage U₁ during a first time period t₁ and, after a triggering threshold AP of a resultant current of the sensor element (1) has been exceeded, said sensor element is operated with the second voltage U₂, the second voltage U₂ being different from zero and being smaller in comparison with the first voltage U₁, such that a rapid build-up of a particle layer (5) on the sensor element (1) takes place in the first time period t₁ in order rapidly to obtain an evaluatable signal, and the signal profile of the resultant current is detected in the second time period t₂, utilized as measurement time, and that a regeneration of the sensor element (1) is carried out after the second time period t₂ has elapsed.

2. Method according to Claim 1, **characterized in that** the time duration t₁ until the triggering threshold AP of the sensor element (1) is exceeded is minimized by the selection of the voltage level of the first voltage U₁.

3. Method according to Claim 1, **characterized in that** the sensor element (1) is operated with a lower voltage U₂ during the second time period t₂ in order to lengthen the measurement duration.

4. Method according to Claim 1, **characterized in that** the first voltage U₁ applied to the voltage terminals (2) of the sensor element (1) is between 10 volts and 42 volts.

5. Method according to Claim 1, **characterized in that** the second voltage U₂ applied to the voltage terminals (2) of the sensor element (1) is in the range of between 0 volts and 10 volts.

## Revendications

1. Procédé de contrôle du dépôt de particules sur un élément de détection (1) qui présente une première électrode (3) et une autre électrode (4) sur lesquelles une première tension U₁ ainsi qu'une deuxième tension U₂ sont appliquées par des bornes de tension (2), **caractérisé en ce que**
l'élément de détection (1) reçoit une première tension U₁ pendant un premier intervalle de temps t₁ et la deuxième tension U₂ après qu'un courant résultant de l'élément de détection (1) a dépassé un seuil de déclenchement AP,
**en ce que** la deuxième tension U₂ est différente de zéro et est plus petite que la première tension U₁ de telle sorte qu'au cours du premier intervalle de temps t₁, une couche (5) de particules s'établisse plus rapidement sur l'élément de détection (1) pour obtenir rapidement un signal évaluable et que l'évolution du signal du courant résultant soit détectée au cours du deuxième intervalle de temps t₂ utilisé comme durée de mesure et
**en ce qu'**une régénération de l'élément de détection (1) est exécutée après que le deuxième intervalle de temps t₂ s'est écoulé.

2. Procédé selon la revendication 1, **caractérisé en ce que** l'intervalle de temps t₁ qui s'écoule jusqu'à ce que le seuil de déclenchement AP de l'élément de détection (1) soit dépassé est minimisé par sélection du niveau de la première tension U₁.

3. Procédé selon la revendication 1, **caractérisé en ce que** pour prolonger la durée de mesure, l'élément de détection (1) est alimenté en une tension U₂ plus basse pendant le deuxième intervalle de temps t₂.

4. Procédé selon la revendication 1, **caractérisé en ce que** la première tension U₁ appliquée sur les bornes de tension (2) de l'élément de détection (1) est comprise entre 10 volts et 42 volts.

5. Procédé selon la revendication 1, **caractérisé en ce que** la deuxième tension U₂ appliquée sur les bornes de tension (2) de l'élément de détection (1) est comprise entre 0 volt et 10 volts.
